# EUROPÄISCHE PATENTSCHRIFT

(11) **EP 1 084 070 B1**
(45) Veröffentlichungstag und Bekanntmachung des Hinweises auf die Patenterteilung: **11.09.2002**
(21) Anmeldenummer: 99919206.5
(22) Anmeldetag: 07.04.1999
(51) Int. Cl.: B65G 17/38

(54) **TRANSPORTKETTE**
CONVEYOR CHAIN
CHAINE TRANSPORTEUSE

(30) Priorität: 17.04.1998 DE 19817125
(43) Veröffentlichungstag der Anmeldung: 21.03.2001
(73) Patentinhaber: Interroll Holding AG, CH-6592 San Antonino (CH)
(72) Erfinder: SPECHT, Dieter, CH-6618 Arcegno (CH)
(74) Vertreter: Rutetzki, Andreas, Dipl.-Ing.
(86) Internationale Anmeldenummer: EP9902357
(87) Internationale Veröffentlichungsnummer: WO99054239

(56) Entgegenhaltungen:
- EP-A- 0 462 336
- FR-A- 1 368 646
- GB-A- 897 549
- US-A- 4 153 152
- US-A- 5 586 644

## Beschreibung

Die Erfindung betrifft eine Transportkette zum Fördern von Gegenständen.

Es sind Transportketten bekannt, die in der Industrie zum Fördern von verschiedenartigen Gegenständen eingesetzt werden. Derartige Transportketten bestehen aus zahlreichen Kettengliedern, die in der Regel eine plane Oberfläche aufweisen, auf die die zu fördernden Gegenstände gestellt werden können. Häufig werden mindestens zwei parallel zueinander verlaufende Transportketten eingesetzt, um auch größere Gegenstände transportieren zu können, die dann auf beiden Ketten aufliegen. Die einzelnen Kettenglieder sind beweglich miteinander verbunden, um Schwenkbewegungen in zwei zueinander senkrechten Richtungen zu ermöglichen. Zum einen müssen die Kettenglieder sich in der Transportebene zueinander bewegen können, um auch einen Verlauf der Transportstrecke in Kurven zu ermöglichen, andererseits müssen sich die Kettenglieder senkrecht zu der Transportebene zueinander bewegen können, um einen Rücklauf der Kettenglieder unterhalb der Förderebene zu ermöglichen. Bei den bekannten Transportketten wird diese um zwei Achsen bewegliche Verbindung zwischen den Kettengliedern häufig durch eine Art Kreuzgelenk gebildet, d.h. die beiden Schwenkachsen schneiden sich in einen Punkt. Diese Gelenkverbindung ist so aufgebaut, daß die einzelnen Kettenglieder mittels horizontaler bzw. parallel zur Transportebene verlaufender Schwenkachsen, die eine Schwenkbewegung senkrecht zur Transportebene ermöglichen, miteinander verbunden sind. Diese Schwenkachsen sind jeweils in einem ersten Kettenglied festgelagert, während sie sich in dem angrenzenden zweiten Kettenglied durch Langlöcher erstrecken, die nicht nur eine Drehbewegung der beiden Kettenglieder zueinander um diese Achse ermöglichen, sondern der Achse eine zusätzliche Bewegungsfreiheit in Richtung der Transportebene geben, die eine Schwenkbewegung der Kettenglieder innerhalb der Transportebene ermöglicht. Es existiert also nur eine reale Schwenkachse, die Schwenkbewegung um die zweite, nicht real vorhandene, Schwenkachse wird lediglich durch ein Spiel der Lagerung der ersten Achse in einem der beiden aneinander angrenzenden Kettenglieder erreicht. Aufgrund dieser Konstruktion ergibt sich bei den bekannten Transportketten dieser Art nur eine eingeschränkte Beweglichkeit. Weiterhin kann sich in den seitlichen Langlöchern, durch die die Schwenkachsen geführt sind, leicht Schmutz ansammeln, der die Beweglichkeit und damit die Funktion der Transportkette weiter einschränkt. Die geringe Beweglichkeit derartiger Transportketten erfordert zusätzlich ein großes Spiel in der seitlichen Führung, um einen Verlauf in Kurven zu ermöglichen.

GB 897,549 offenbart eine Transportkette, bei welcher eine Vielzahl von Hauptgliedern jeweils über Verbindungsglieder miteinander verbunden sind. Dabei weisen die Hauptglieder an ihren Oberseiten Tragplatten auf, welche sich seitlich über die Hauptglieder hinaus erstrecken, um Lasten zu tragen. Die Haupt- und Verbindungsglieder sind an Schwenkachsen miteinander verbunden, wobei sich die Schwenkachsen abwechselnd senkrecht zueinander erstrecken. Das heißt, ein Verbindungsglied ist an einem ersten Ende mit einem angrenzenden Hauptglied über eine waagerechte Schwenkachse verbunden und an dem entgegengesetzten Ende mit einem weiteren Hauptglied über eine vertikal verlaufende Schwenkachse verbunden. Die Haupt- und Verbindungsglieder, welche unterhalb der Tragplatten angeordnet sind, sind offen ausgebildet, d.h. die Schwenkachsen sind zur Seite und nach unten frei zugänglich, so daß sie leicht verschmutzen können.

Es ist Aufgabe der Erfindung, eine verbesserte Transportkette zu schaffen, die unter Beibehaltung einer großen Beweglichkeit wenig anfällig für Verschmutzungen und Beschädigungen ist.

Diese Aufgabe wird durch die im Anspruch 1 angegebenen Merkmale gelöst. Bevorzugte Ausführungsformen ergeben sich aus den Unteransprüchen.

Die erfindungsgemäße Transportkette weist für die zwei erforderlichen Schwenkbewegungen zwischen den einzelnen Kettengliedern zwei separate Scharniere auf, die über entsprechende Verbindungsglieder miteinander verbunden sind. Durch diese Entkopplung der beiden Schwenkachsen wird die große Bewegungsfreiheit der Kettenglieder um die jeweilige Achse ermöglicht. Weiterhin kann auf die äußerst schmutzempfindlichen, aus dem Stand der Technik bekannten seitlichen Langlöcher verzichtet werden, wodurch die Zuverlässigkeit der Funktion der Transportkette erhöht wird. Bei der erfindungsgemäßen Transportkette wird die Beweglichkeit der Kettenglieder zueinander nicht durch die Konstruktion der Gelenke selber begrenzt, sondern lediglich durch eventuelle Anschläge, die sich aus der Gestalt der Ober- und Unterseiten der Hauptglieder ergeben. Die Verbindungsglieder werden an ihren Ober- und Unterseiten jeweils von dem an das zweite Scharnier angrenzenden Hauptglied bis in den Bereich des ersten Scharniers vollständig überdeckt. Dies hat den Vorteil, daß sich auf der Kettenoberseite eine nahezu durchgängige, glatte Oberfläche bildet, die nur durch einen schmalen Spalt zwischen den einzelnen Hauptgliedern unterbrochen wird. Dies ermöglicht eine große Standfläche für die zu transportierenden Güter und die Scharniere zwischen den einzelnen Kettengliedern werden durch die Abdeckung vor Schmutzeinwirkung oder mechanischen Beschädigungen geschützt. Die Abdeckung der Verbindungsglieder an ihrer Unterseite ermöglicht eine nahezu durchgängige, glatte Auflagefläche der Transportkette, die die Gleiteigenschaften der Kette in einer Führung verbessern. Trotz der nahezu vollständigen Abdeckung des Verbindungsgliedes wird die Beweglichkeit der beiden Hauptglieder parallel zur Kettenoberfläche kaum eingeschränkt. Auch die Beweglichkeit zwischen den Hauptgliedern senkrecht zur Kettenoberfläche bzw. zur Transportebene wird kaum eingeschränkt, da die Trennfuge zwischen den Ober- und Unterseiten der beiden aneinandergrenzenden Hauptglieder im Bereich des zweiten Scharniers liegt. Dadurch werden die beiden Scharniere optimal geschützt, ohne die Beweglichkeit der Transportkette bedeutend einzuschränken.

Sämtliche Hauptglieder und sämtliche Verbindungsglieder sind vorzugsweise jeweils identisch ausgebildet. Dies ermöglicht einen kostengünstigen Aufbau der Transportkette, da diese nur aus zwei unterschiedlichen Bauteilen, den Hauptund den Verbindungsgliedern besteht.

Bevorzugt weisen die Hauptglieder auf ihren Unterseiten Ausnehmungen auf, in die ein Kettenrad eingreifen kann. Diese Ausnehmungen auf der Unterseite können unabhängig von der übrigen Gestalt des Kettengliedes so ausgebildet werden, daß ein besonders günstiger Kontakt zwischen dem Kettenrad und den Hauptgliedern ermöglicht wird. Dadurch wird ein zuverlässiger und sicherer Antrieb der Transportkette ermöglicht, über den auch große Kräfte zuverlässig übertragen werden können, so daß auch schwerere Güter auf der Transportkette transportiert werden können.

Weiter bevorzugt weisen die Hauptglieder seitliche, in Kettenlängsrichtung verlaufende Führungsnuten auf. Diese Führungsnuten erlauben eine sichere Führung der Transportkette in einem entsprechenden Führungsprofil. Günstigerweise sind die Führungsnuten so ausgestaltet, daß die Oberseite des Führungsprofils durch die oberen Flanken der Führungsnut, insbesondere auch in Kurven, überdeckt wird. Dadurch wird verhindert, daß sich Schmutz oder auch Teile der zu fördernden Güter zwischen der Transportkette und dem Führungsprofil festsetzen bzw. verfangen können. Die Transportkette bildet somit gemeinsam mit dem Führungsprofil eine glatte, nahezu geschlossene Oberfläche, die das Eindringen von Fremdkörpern in die Führungsbahn und damit eine eventuelle Funktionsstörung verhindert. Weiterhin kann durch die Ausbildung einer solchen Führungsnut erreicht werden, daß die Hauptglieder sowohl mit der oberen Flanke der Führungsnut als auch mit ihrer Unterseite auf dem Führungsprofil aufliegen, wodurch eine erhöhte Tragfähigkeit erzielt werden kann.

Vorzugsweise besteht zumindest eines der beiden Scharniere aus mehreren kammartigen Vorsprüngen am Hauptglied und entsprechenden kammartigen Vorsprüngen am Verbindungsglied, die in die Zwischenräume der Vorsprünge am Hauptglied eingreifen, wobei ein durchgehender Scharnierbolzen sich durch die Vorsprünge des Haupt- und des Verbindungsgliedes erstreckt. Diese Ausgestaltung der Scharniere gewährleistet, daß der Scharnierbolzen sowohl an dem Verbindungsglied als auch an dem Hauptglied mehrfach gelagert ist, wodurch die zuverlässige Übertragung auch größerer Kräfte sichergestellt wird. Weiterhin ist die Kraftübertragung durch die mehrfache Lagerung des Scharnierbolzens auch äußerst gleichmäßig.

Die Scharnierbolzen werden vorzugsweise durch Rastverbindungen in den Scharnieren gehalten. Dies ermöglicht eine einfache Montage der Transportkette, da die Scharnierbolzen lediglich in die entsprechenden Öffnungen der Scharniere eingesteckt werden müssen und in diesen sicher verrasten. Es sind somit keine weiteren Befestigungselemente und Befestigungsvorgänge erforderlich.

Weiter bevorzugt besteht der Scharnierbolzen aus Kunststoff. Somit ist eine Korrosion des Scharnierbolzens ausgeschlossen, welche die Beweglichkeit des Scharniers einschränken würde. Weiterhin ist ein Scharnierbolzen, insbesondere ein Scharnierbolzen, der Rastverbindungen aufweist, aus Kunststoff äußerst kostengünstig und leicht zu fertigen.

Bevorzugterweise sind die Hauptglieder und die Verbindungsglieder jeweils einstückig, vorzugsweise aus Kunststoff ausgebildet. Die einstückige Ausgestaltung der einzelnen Glieder reduziert die Anzahl der notwendigen Montagetätigkeiten und erlaubt somit eine schnellere und kostengünstigere Montage der Transportkette. Weiterhin wird durch die reduzierte Teileanzahl die Zahl möglicher Fehler verringert und dadurch die Zuverlässigkeit der Transportkette gesteigert. Die Haupt- und Verbindungsglieder sind aus Kunststoff besonders leicht und kostengünstig zu fertigen und zusätzlich wird durch den Einsatz von Kunststoff eine mögliche, die Funktion beeinträchtigende Korrosion der Transportkette ausgeschlossen.

Die Erfindung wird nachfolgend beispielhaft unter Bezugnahme auf die beiliegenden Zeichnungen beschrieben. In den Zeichnungen zeigen:
Figur 1: eine Draufsicht auf die Transportkette,
Figur 2: eine geschnittene Seitenansicht der Transportkette,
Figur 3 (a) - (e): das Hauptglied in verschiedenen Ansichten,
Figur 4: das Verbindungsglied in verschiedenen Ansichten und
Figur 5: einen Querschnitt des Kettentragprofil bei Verwendung mit der erfindungsgenäßen Transportkette,

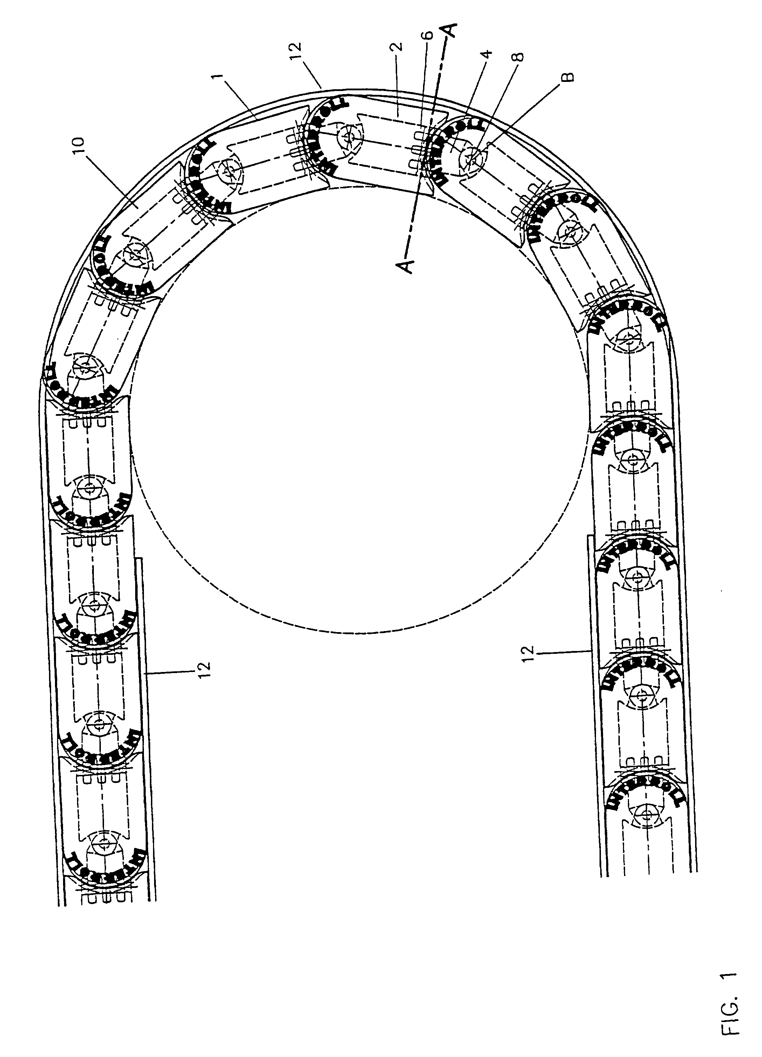

Figur 1 zeigt eine Draufsicht auf eine erfindungsgemäße Transportkette 1. In dieser Ausführung ist nur eine Transportkette 1, die U-förmig umgelenkt wird, gezeigt. Dennoch können in bevorzugten Anordnungen auch zwei oder mehr Transportketten 1 parallel zueinander laufen, um auch größere Gegenstände transportieren zu können. Die Transportkette 1 besteht aus einer Vielzahl von Hauptgliedern 2, die durch Verbindungsglieder 4, gestrichelt dargestellt, miteinander verbunden sind. Die Verbindung ist so gestaltet, daß die Verbindungsglieder 4 weitgehend von den Hauptgliedern 2 überdeckt werden. Die Verbindung zwischen den Hauptgliedern 2 und den Verbindungsgliedern 4 ist durch ein erstes Scharnier 6 und durch ein zweites Scharnier 8 beweglich ausgestaltet, wobei die Schwenkachsen A, B der beiden Scharniere 6, 8 im wesentlichen senkrecht zueinander ausgebildet sind. Die Schwenkachse A des Scharniers 6 erstreckt sich im wesentlichen senkrecht zur Kettenlängsrichtung und parallel zur Oberfläche der Transportkette 1, so daß eine Biegebewegung zwischen den Kettengliedern 2, 4 in Kettenlängsrichtung senkrecht zur Kettenoberfläche möglich wird. Die Schwenkachse B des Scharniers 8 erstreckt sich im wesentlichen senkrecht zur Oberfläche der Transportkette 1 und ermöglicht eine Schwenkbewegung der Kette in der Förderebene.

Die Hauptglieder 2 sind an ihrer Oberseite in Form einer Abdeckplatte 10 ausgestaltet, welche die Scharniere 6, 8 und die Verbindungsglieder 4 weitgehend überdeckt. Hierdurch ergibt sich eine nahezu durchgängige, glatte Oberfläche der Transportkette 1, die wenig Spalte aufweist, in die Schmutz eindrigen kann. Dadurch sind die Scharniere 6, 8 geschützt angeordnet, so daß ihre große Beweglichkeit auch langfristig sichergestellt ist. Weiterhin ist in Figur 1 noch das Kettentragprofil 12 angedeutet, welches die Transportkette 1 trägt und führt. In dieser Draufsicht ist zu erkennen, daß die erfindungsgemäße Transportkette 1 auch sehr enge Kurvenradien durchlaufen kann, insbesondere das Scharnier 8 bietet eine große Bewegungsfreiheit, die weniger durch das Scharnier 8 selber als durch das Aneinanderstoßen von Teilen der Hauptglieder 2 begrenzt wird.

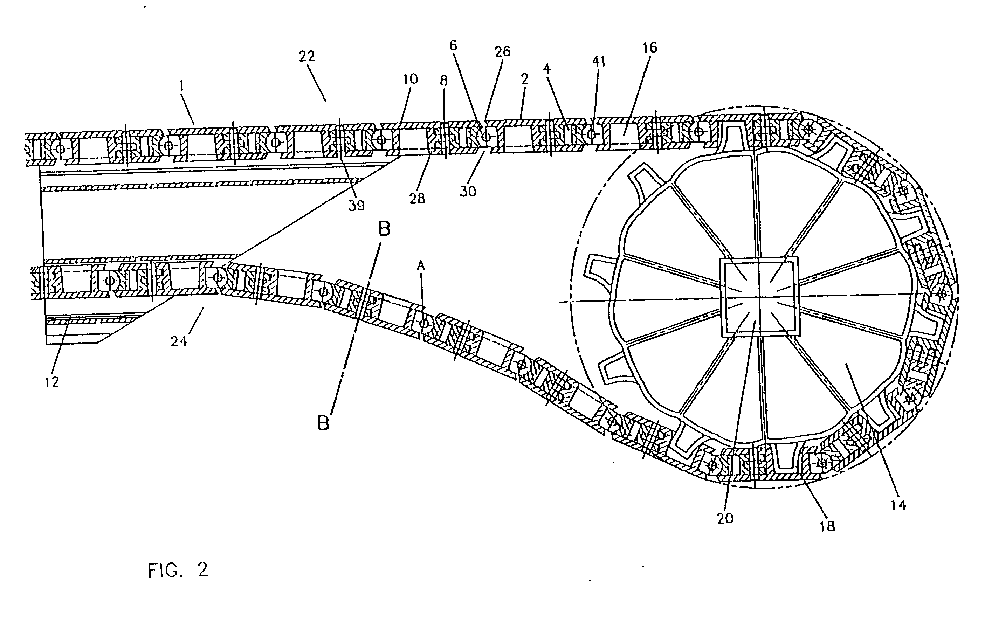

Figur 2 zeigt eine geschnittene Seitenansicht der erfindungsgemäßen Transportkette 1. Hier ist insbesondere die Führung und der Antrieb der Transportkette 1 gezeigt. Die Transportkette 1 wird in einem Kettentragprofil 12 geführt und über ein Kettenrad 14 umgelenkt und von diesem gleichzeitig angetrieben. Hierzu weisen die Hauptglieder 2 an ihrer Unterseite Ausnehmungen 16 auf, in die Zähne 18 des Kettenrades 14 eingreifen können. Das Kettenrad 14 kann mittels einer Nabe 20, die hier einen im wesentlichen quadratischen Querschnitt aufweist, auf einer Welle befestigt werden, um über diese angetrieben zu werden. Im Hinlauf 22 wird die Transportkette an der Oberseite des Tragprofils 12 geführt und dann über das Kettenrad 14 umgelenkt. Der Rücklauf 24 der Transportkette 1 erfolgt parallel zu dem Hinlauf 22 der Transportkette 1, unterhalb des Hinlaufes 22 im Inneren des Kettentragprofils 12. Dadurch, daß der Rücklauf 24 im Inneren des Kettentragprofils 12 erfolgt, ist die Transportkette 1 vor Beschädigung oder Verschmutzung geschützt. Ferner wird die Anzahl der freiliegenden, bewegten Teile reduziert, wodurch die Verletzungsgefahr für in der Umgebung der Transportkette 1 hantierende Personen minimiert wird. Weiterhin ist in Figur 2 erkennbar, daß die Scharniere 6 eine Bewegung der Hauptglieder 2 in zwei Richtungen zueinander ermöglichen. Somit kann die Transportkette 1 durch die Schwenkbewegung um die Scharniere 6 in zwei Richtungen gebogen werden. Zunächst wird die Transportkette 1 über das Kettenrad 14 nach unten umgebogen, um dann nach Umschlingung des Kettenrades 14 in die entgegengesetzte Richtung gebogen zu werden. Dies ermöglicht, daß trotz eines großen Kettenrades 14, welches eine günstige Kraftübertragung ermöglicht, der Hinlauf 22 und der Rücklauf 24 der Transportkette 1 in einem gemeinsamen Kettentragprofil 12, äußerst eng beieinander erfolgen können. Somit wird eine äußerst kompakte und platzsparende Anordnung der Transportkette 1 erzielt. Die Oberseiten der Hauptglieder 2 sind als Abdeckplatten 10 ausgebildet, die eine nahezu durchgehende Oberfläche der Transportkette 1 bilden. Die äußerst schmalen Spalte 26 zwischen den einzelnen Hauptgliedern 2 an deren Oberseite sind vorteilhafterweise schräg ausgebildet, so daß die Scharniere 6, 8 von den Abdeckplatten 10 der Hauptglieder 2 nahezu vollständig überdeckt werden. Die schmalen Spalte 26 begrenzen zwar den Bewegungsfreiraum der Scharniere 6 in einer vertikalen Richtung, d.h. in Richtung senkrecht zur Transportebene, doch ist in dieser vertikalen Schwenkrichtung nur eine geringe Bewegungsfreiheit erforderlich, da diese Beweglichkeit nur für den Rücklauf 24, bei dem, wie gezeigt, ein großer Krümmungsradius möglich ist, benötigt wird. Weiterhin ist eine geringe Bewegungsfreiheit in dieser Richtung erforderlich für den Fall, in welchem die Transportkette 1 Steigungen überwinden soll. Auch die Unterseiten der Hauptglieder 2 sind in Form von Abdeckplatten 28 ausgebildet, welche die Eingriffsöffnungen 16 für die Zähne 18 des Kettenrades 14 sowie größere Spalte 30 zwischen den einzelnen Hauptgliedern 2 aufweisen, die eine größere Beweglichkeit der Scharniere 6 in einer Schwenkrichtung nach unten ermöglichen. Dadurch wird es erreicht, daß ein Kettenrad 14, das als Antriebs- oder Umlenkrad dient, mit einem geringeren Radius ausgebildet werden kann. Die größeren Spalte 30 an der Unterseite der Transportkette 1 sind weniger störend, da sie geschützt im Inneren des Kettentragprofils 12 verlaufen und somit die Gefahr des Eindringens von Schmutz gering ist. Die Verbindungsglieder 4 liegen im wesentlichen vollständig zwischen den Abdeckplatten 10 und 28 an der Ober- und Unterseite der Hauptglieder 2. Dies ermöglicht neben der vor Schmutz oder mechanischer Beschädigung geschützten Lage eine große Abstützfläche zwischen den Hauptund Verbindungsgliedern, wodurch eine hohe Tragfähigkeit der Transportkette 1 erzielt wird.

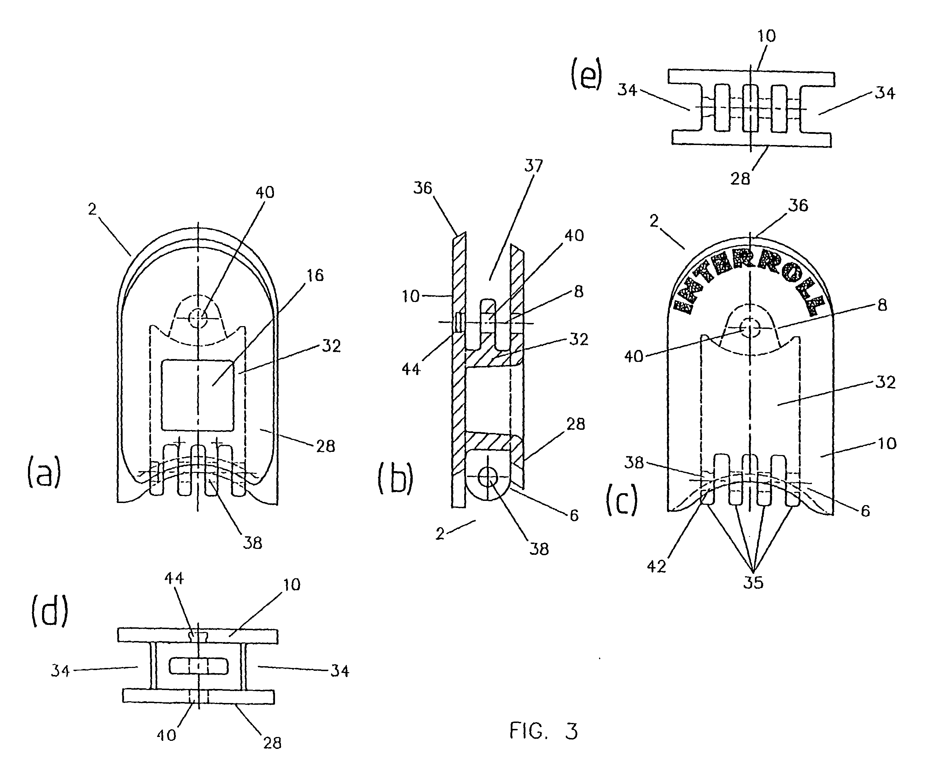

Figur 3 zeigt ein Hauptglied 2 in verschiedenen Ansichten. In Figur 3 rechts ist eine Draufsicht auf das Hauptteil 2 dargestellt. Das Hauptteil 2 wird fast vollständig von der Abdeckplatte 10 überdeckt. Diese bildet somit eine große Tragfläche, auf der zu fördernde Lasten einen sicheren Stand haben. Das Mittelstück 32 des Hauptgliedes 2, hier gestrichelt dargestellt, wird nahezu vollständig von der Abdeckplatte 10 überdeckt und liegt gegenüber den Seitenkanten der Abdeckplatte 10 zurückversetzt, wodurch seitliche Führungsnuten 34 gebildet werden, in die das Kettentragprofil 12 eingreifen kann. An dem Mittelstück 32 sind die hauptgliedseitigen Teile der Scharniere 6 und 8 ausgebildet. In der Draufsicht ist zu erkennen, daß das Scharnier 6 aus mehreren kammartigen Vorsprüngen 35 besteht, in deren Zwischenräume die entsprechenden, ebenfalls kammartigen Gegenstücke des Verbindungsgliedes 4 eingreifen können. So wird eine hohe Tragfähigkeit und gleichmäßige Kraftübertragung durch das Scharnier 6 gewährleistet. Das Scharnier 8 ist gegenüber der vorderen Kante 36 des Hauptgliedes 2 nach innen zurückversetzt, wodurch ermöglicht wird, daß im zusammengebauten Zustand der Transportkette 1 das Zwischenglied 4 fast vollständig von der Abdeckplatte 10 überdeckt wird. In der geschnittenen Seitenansicht des Hauptgliedes 2 ist zu erkennen, daß auch das Scharnier 8 kammartig ausgebildet ist, so ist auch bei diesem Scharnier 8 eine hohe Tragfähigkeit und gleichmäßige Krafteinleitung sichergestellt. Die untere Abdeckplatte 28 erstreckt sich in Richtung der vorderen Kante 36 des Hauptgliedes 2 über das Scharnier 8 hinaus, so daß gemeinsam mit der oberen Abdeckplatte 10 ein Aufnahmeraum 37 für das Zwischenglied 4 geschaffen wird. Durch die kammartigen Vorsprünge der hauptgliedseitigen Teile der Scharniere 6 und 8 erstrekken sich Bohrungen 38 und 40, in die Scharnierbolzen 39, 41 eingesetzt werden können. Die Bohrung 40 des Scharniers 8 ist nicht durchgehend ausgebildet, sondern an ihrer Oberseite durch die Abdeckplatte 10 überdeckt, wodurch ein Eindringen von Schmutz von der Kettenoberseite in das Scharnier verhindert wird. Die Scharnierbohrungen 38 und 40 weisen weiterhin Rasteinrichtungen 42 und 44 auf, in denen die Scharnierbolzen 39, 41 eingerastet werden können. Dies ermöglicht eine einfache Montage, da jegliche Verschraubung der Scharniere 6, 8 entfällt und die Scharniere 6, 8 durch einfaches Zusammenstecken montiert werden können. Links in Figur 3 ist eine Draufsicht auf die Unterseite eines Hauptgliedes 2 dargestellt. Der Mittelteil 32 des Hauptgliedes 2 wird nahezu vollständig von der unteren Abdeckplatte 28 überdeckt. Die untere Abdeckplatte 28 ragt, ebenso wie die obere Abdeckplatte 10, seitlich über das Mittelteil 32 hinaus, wodurch gemeinsam mit der oberen Abdeckplatte 10 die zuvor beschriebene Führungsnut 34 gebildet wird. In etwa in der Mitte des Mittelteils 32 befindet sich in der Unterseite die Eingriffsöffnung 16, in die ein Zahn 18 eines Kettenrades 14 eingreifen kann. Die untere Abdeckplatte 28 hat insbesondere in Längsrichtung eine geringere Ausdehnung als die obere Abdeckplatte 10, wodurch bei Biegung der Transportkette 1 um die Schwenkachsen A nach unten eine größere Beweglichkeit erzielt wird.

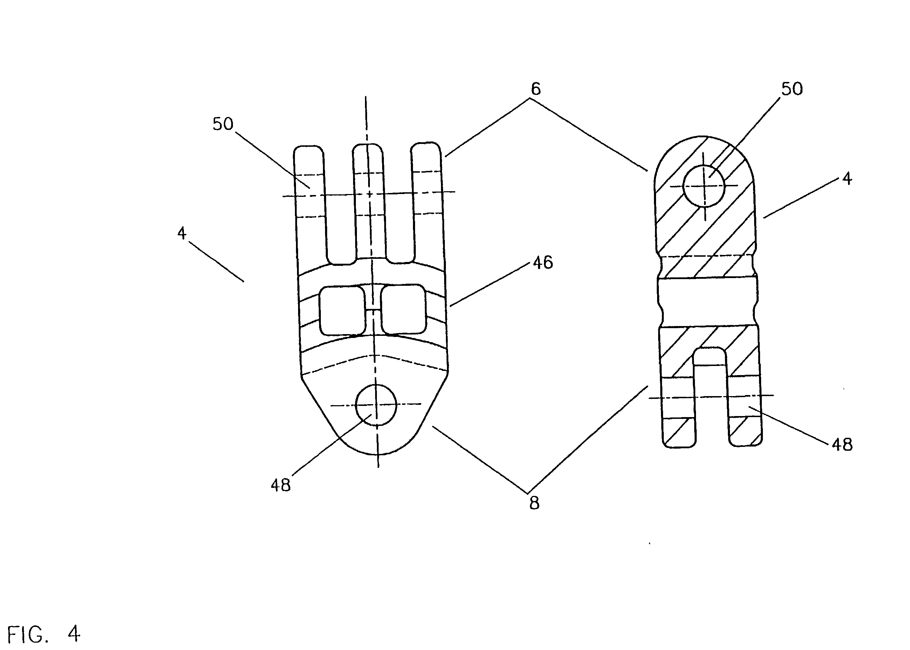

Figur 4 zeigt verschiedene Ansichten des Verbindungsgliedes 4. Das Verbindungsglied 4 weist an seinen beiden Längsenden die verbindungsgliedseitigen Teile der Scharniere 6 und 8 auf. Auch diese Teile sind kammartig ausgebildet, so daß sie in die korrespondierenden Zwischenräume der hauptgliedseitigen Teile der Scharniere 6, 8 eingreifen können. Durch die beiden Scharnierteile erstrecken sich Scharnierbohrungen 48 und 50, durch welche sich die Scharnierbolzen 39, 41, welche sich durch die Scharnierbohrungen 38 und 40 am Hauptglied 2 erstreckenden, im zusammengebauten Zustand des Scharniers 6, 8 ebenfalls erstrecken. Das Mittelteil 46 des Verbindungsgliedes 4 weist Aussparungen auf, die lediglich der Materialersparnis und damit auch einer Gewichtsreduzierung dienen. Die beiden Längsenden des Verbindungsgliedes 4 sind entsprechend der Schwenkrichtung der Scharniere 6 und 8 abgerundet, um eine große Bewegungsfreiheit zu ermöglichen. Vorteilhafterweise weist das Verbindungsglied 4 eine geringere Breite als das Mittelteil 32 des Hauptgliedes 2 auf, wodurch bei der Transportkette 1 sichergestellt ist, daß die Führung im wesentlichen durch die glatten Seitenkanten des Mittelteils 32 des Hauptgliedes 2 in den Führungsnuten 34 erfolgt.

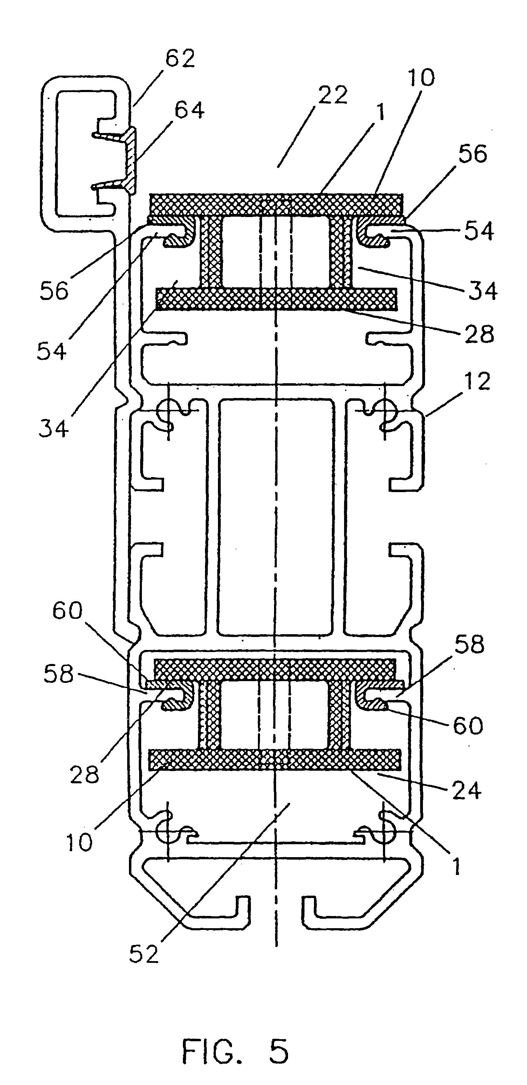

Der in Figur 5 dargestellte Querschnitt zeigt ein Kettentragprofil 12 mit der erfindungsgemäßen Transportkette 1. An seiner Oberseite führt das Kettentragprofil 12 die Transportkette 1 im Hinlauf 22. Im unteren Bereich des Kettentragprofils 12 wird in einem geschlossenen Hohlraum 52 die Transportkette 1 in ihrem Rücklauf 24 geführt. Bei der Führung des Hinlaufs 22 der Transportkette 1 greift das Kettentragprofil 12 mit entsprechenden Vorsprüngen 54 in die Führungsnuten 34 der Hauptglieder 2 der Transportkette 1 ein. Auf den Vorsprüngen 24 sind Gleitschienen 56 angebracht, die ein möglichst leichtes Gleiten der Transportkette 1 auf dem Kettentragprofil 12 ermöglichen. Diese Gleitschienen 56 sind vorteilhafterweise aus Kunststoff, der hochgleitende Eigenschaften besitzt, hergestellt. Dies kann beispielsweise ein Polyamid sein. In dem Hohlraum 52 für den Rücklauf 24 der Transportkette 1 sind an dem Kettentragprofil 12 weitere Vorsprünge 58 angebracht. Diese Vorsprünge 58 tragen wie die Vorsprünge 54 an der Oberseite des Kettentragprofils 12 ebenfalls Gleitschienen 60. Diese Gleitschienen 60 sind vorteilhafterweise identisch ausgebildet wie die Gleitschienen 56, die an der Oberseite des Kettentragprofils 12 verwendet werden. Dies ermöglicht eine Reduzierung der erforderlichen Teilevielfalt. Die Vorsprünge 58 mit der Gleitschiene 60 greifen ebenfalls in die Führungsnuten 34 der Hauptglieder 2 der Transportkette 1 ein. Allerdings liegen die Hauptglieder 2 der Transportkette 1 in ihrem Rücklauf 24 mit den unteren Abdeckplatten 28 auf den Gleitschienen 60 auf, während im Hinlauf 22 die Transportkette 1 durch die obere Abdeckplatten 10 der Hauptglieder 2 getragen wird. Die Abdeckplatte 10 ragt über die Vorsprünge 54 des Kettentragprofils 12 hinaus, so daß das Kettentragprofil 12 durch die Abdeckplatte 10 nach oben abgeschlossen ist, wodurch ein Eindringen von Schmutz in das Innere des Kettentragprofils und insbesondere in die Scharniere der Transportkette 1 verhindert wird. Bevorzugterweise erstrecken sich die Abdeckplatten 10 über die Vorsprünge 54 derart weit hinaus, daß auch in einer Kurve eine vollständige Abdeckung des sich bildenden Spalts gewährleistet ist. Zusätzlich ist bei dem hier gezeigten Tragprofil 12 eine Führungsschiene 62 angebracht. Diese Führungsschiene 62 steht im wesentlichen in einem rechten Winkel zu der Oberfläche der Transportkette 1 und erstreckt sich parallel zur Kettenlängsrichtung entlang des Transportweges. In dieses Führungsglied 62 ist ein Gleitkörper 64 eingesetzt, der eine seitliche Führung eines auf der Transportkette 1 zu transportierenden Gegenstandes sicherstellt.

Das hier gezeigte Kettentragprofil 12 ist vorteilhafterweise so gestaltet, daß die Verwendung dieses Kettentragprofiles 12 nicht auf die erfindungsgemäße Transportkette 1 beschränkt ist, sondern vielmehr auch den Einsatz eines Transportriemens oder einer Rollenkette ermöglicht.

## Patentansprüche

1. Transportkette (1) mit einer Vielzahl von Hauptgliedern (2), welche an ihren Oberseiten als Tragflächen ausgebildet sind, auf denen die zu fördernden Lasten getragen werden, und von denen jeweils zwei über ein einstückig ausgebildetes Verbindungsglied (4) beweglich miteinander verbunden sind, wobei ein erstes Ende eines ersten Hauptgliedes (2) in Kettenlängsrichtung gemeinsam mit einem ersten Ende eines Verbindungsgliedes (4) ein erstes Scharnier (6) bildet, das eine Schwenkbewegung um eine Achse (A) im wesentlichen rechtwinklig zur Kettenlängsrichtung und im wesentlichen parallel zur Kettenoberfläche ermöglicht,
das zweite Ende des Verbindungsgliedes (4) gemeinsam mit dem zweiten Ende des folgenden Hauptgliedes (2) ein zweites Scharnier (8) bildet, welches eine Schwenkbewegung um eine Achse (B) senkrecht zur Kettenlängsrichtung und zur Schwenkachse (A) des ersten Scharniers (8) ermöglicht, und
die beiden Achsen (A, B) in der Kettenlängsrichtung gesehen in zwei unterschiedlichen Ebenen angeordnet sind,
**dadurch gekennzeichnet, daß**
die Hauptglieder (2) jeweils einstückig ausgebildet sind und
die Verbindungsglieder (4) jeweils von dem an das zweite Scharnier (6) angrenzenden Hauptglied (2) an ihrer Ober- und Unterseite bis in den Bereich des ersten Scharniers (8) vollständig überdeckt werden.

2. Transportkette (1) nach Anspruch 1, bei welcher sämtliche Hauptglieder (2) und sämtliche Verbindungsglieder (4) jeweils identisch ausgebildet sind.

3. Transportkette (1) nach einem der vorangehenden Ansprüche, bei welcher die Hauptglieder (2) auf ihren Unterseiten Ausnehmungen (16) aufweisen, in die ein Kettenrad (14) eingreifen kann.

4. Transportkette (1) nach einem der vorangehenden Ansprüche, bei welcher die Hauptglieder (2) seitliche, in Kettenlängsrichtung verlaufende Führungsnuten (34) aufweisen.

5. Transportkette (1) nach einem der vorangehenden Ansprüche, bei welcher zumindest eines der beiden Scharniere (6, 8) aus mehreren kammartigen Vorsprüngen am Hauptglied (2) und entsprechenden kammartigen Vorsprüngen am Verbindungsglied (4) besteht, die in die Zwischenräume der Vorsprünge am Hauptglied (4) eingreifen, wobei ein durchgehender Scharnierbolzen sich durch die Vorsprünge des Haupt- (2) und des Verbindungsgliedes (4) erstreckt.

6. Transportkette (1) nach Anspruch 5, bei welcher die Scharnierbolzen (39, 41) durch Rastverbindungen (42, 44) in den Scharnieren (6, 8) gehalten werden.

7. Transportkette (1) nach Anspruch 5 oder 6, bei welcher die Scharnierbolzen (39, 41) aus Kunststoff bestehen.

8. Transportkette (1) nach einem der vorangehenden Ansprüche, bei welcher die Hauptglieder (2) und die Verbindungsglieder (4) jeweils einstückig, vorzugsweise aus Kunststoff ausgebildet sind.

## Claims

1. Transporting chain (1) with a multiplicity of main links (2) which are designed, on their top sides, as load-bearing surfaces, on which the loads which are to be conveyed are borne, and of which in each case two are connected to one another in a moveable manner via a connecting link (4) formed in one piece, it being the case that
a first end of a first main link (2) in the longitudinal direction of the chain, together with a first end of a connecting link (4), forms a first hinge (6), which allows a pivoting movement about an axis (A) essentially at right angles to the longitudinal direction of the chain and essentially parallel to the surface of the chain,
the second end of the connecting link (4), together with the second end of the following main link (2), forms a second hinge (8), which allows a pivoting movement about an axis (B) perpendicular to the longitudinal direction of the chain and to the pivoting axis (A) of the first hinge (6), and
the two axes (A, B), as seen in the longitudinal direction of the chain, are arranged in two different planes,
**characterized in that**
the main links (2) are each formed in one piece, and the connecting links (4) are each covered over completely on their top side and underside, into the region of the first hinge (6), in each case by the main link (2) adjacent to the second hinge (8).

2. Transporting chain (1) according to Claim 1, in the case of which all the main links (2) and all the connecting links (4) are of identical design in each case.

3. Transporting chain (1) according to one of the preceding claims, in the case of which the main links (2), on their undersides, have cutouts (16) in which a chain wheel (14) can engage.

4. Transporting chain (1) according to one of the preceding claims, in the case of which the main links (2) have lateral guide grooves (34) running in the longitudinal direction of the chain.

5. Transporting chain (1) according to one of the preceding claims, in the case of which at least one of the two hinges (6, 8) comprises a plurality of comb-like protrusions on the main link (2) and corresponding comb-like protrusions on the connecting link (4), the latter protrusions engaging in the interspaces between the protrusions on the main link (2), a continuous hinge pin extending through the protrusions of the main link (2) and of the connecting link (4).

6. Transporting chain (1) according to Claim 5, in the case of which the hinge pins (39, 41) are retained in the hinges (6, 8) by latching connections (42, 44).

7. Transporting chain (1) according to Claim 5 or 6, in the case of which the hinge pins (39, 41) consist of plastic.

8. Transporting chain (1) according to one of the preceding claims, in the case of which the main links (2) and the connecting links (4) are each formed in one piece, preferably from plastic.

## Revendications

1. Chaîne transporteuse (1) comportant une pluralité de maillons principaux (2) dont les faces supérieures sont agencées en tant que surfaces portantes, sur lesquelles sont portées les charges à transporter, et dont deux sont respectivement reliés entre eux de façon amovible par l'intermédiaire d'un maillon de liaison (4) réalisé d'un seul tenant, une première extrémité d'un premier maillon principal (2) formant avec une première extrémité d'un maillon de liaison (4) une première charnière (6) dans la direction longitudinale de la chaîne, qui permet un mouvement de pivotement autour d'un axe (A) sensiblement à angle droit par rapport à la direction longitudinale de la chaîne, et pour l'essentiel parallèlement à la surface de la chaîne,
la deuxième extrémité du maillon de liaison (4) formant avec la deuxième extrémité du maillon principal suivant (2) une deuxième charnière (8), qui permet un mouvement de pivotement autour d'un axe (B) perpendiculairement à la direction longitudinale de la chaîne et à l'axe de pivotement (A) de la première charnière (8), et,
les deux axes (A, B) étant disposés en deux différents plans vus dans la direction longitudinale de la chaîne,
**caractérisée en ce que**
les maillons principaux (2) sont réalisés d'un seul tenant, et **en ce que** les faces supérieure et inférieure des maillons de liaison (4) sont entièrement recouvertes par le maillon principal (2) adjacent à la deuxième charnière (6) jusque dans la zone de la première charnière (8).

2. Chaîne transporteuse (1) selon la revendication 1, dans le cas de laquelle tous les maillons principaux (2) et tous les maillons de liaison (4) sont agencés de façon identique.

3. Chaîne transporteuse (1) selon l'une des revendications précédentes, dans le cas de laquelle les maillons principaux (2) comportent des évidements (16) sur leurs faces inférieures, dans lesquels peut s'engager une roue à chaîne (14).

4. Chaîne transporteuse (1) selon l'une quelconque des revendications précédentes, dans le cas de laquelle les maillons principaux (2) comportent des rainures de guidage (34) latérales s'étendant dans la direction longitudinale de la chaîne.

5. Chaîne transporteuse (1) selon l'une quelconque des revendications précédentes, dans le cas de laquelle l'une au moins des deux charnières (6, 8) est constituée de plusieurs saillies de type peigne prévues sur le maillon principal (2), et de saillies correspondantes de type peigne prévues sur le maillon de liaison (4) qui s'engagent dans les espaces intermédiaires des saillies du maillon principal (4), un axe de charnière continu s'étendant à travers les saillies du maillon principal (2) et du maillon de liaison (4).

6. Chaîne transporteuse (1) selon la revendication 5, dans le cas de laquelle les axes (39, 41) des charnières sont retenus dans les charnières (6, 8) par des liaisons à encliquetage (42, 44).

7. Chaîne transporteuse (1) selon la revendication 5 ou 6, dans le cas de laquelle les axes (39, 41) des charnières sont en matière plastique.

8. Chaîne transporteuse (1) selon l'une quelconque des revendications précédentes, dans le cas de laquelle les maillons principaux (2) et les maillons de liaison (4) sont réalisés d'un seul tenant, de préférence en matière plastique.
